# EUROPÄISCHE PATENTANMELDUNG

(11) **EP 2 253 450 A1**
(43) Veröffentlichungstag der Anmeldung: **24.11.2010**
(21) Anmeldenummer: 10161645.6
(22) Anmeldetag: 30.04.2010
(51) Int. Cl.: B29C 47/26, B29C 47/20, B29C 47/08, B29C 47/16

(54) **Extrusionsvorrichtung mit verstellbaren Düsenmundstücken**

(30) Priorität: 22.05.2009 DE 102009022370
(71) Anmelder: VMI - AZ Extrusion GmbH, 93486 Runding (DE)
(72) Erfinder: Fischer, Florian, 85560 Ebersberg (DE)
(74) Vertreter: Splanemann

(57) **Zusammenfassung**

Die Erfindung betrifft eine Extrusionsvorrichtung (10), mit einer Extruderschnecke für das Fördern extrudierbarer Masse, insbesondere natürlichen oder künstlichen Kautschukwerkstoffen, mit einem Festigkeitsträgerspeiser der Festigkeitsträger in Richtung einer Düse (12) führt, über welche sie zusammen mit der extrudierbaren Masse aus der Extrusionsvorrichtung (10) austreten, wobei die Düse (12) zwei Düsenmundstücke (14,16) aufweist, die relativ zueinander verfahrbar sind.

## Beschreibung

Die Erfindung betrifft eine Extrusionsvorrichtung, gemäß dem Oberbegriff von Anspruch 1.

Eine derartige Extrusionsvorrichtung, mit der Fäden von Kautschukmasse umhüllt und zusammen mit dieser extrudiert werden, ist seit langem bekannt, beispielsweise aus der US 2,760,230 oder der GB 950 741. Bei derartigen Lösungen werden Drähte oder Fäden von einer Fadenführung einer Düse zugeführt, und zwischen der Fadenführung und der Düse gelangt Kautschukmaterial in den Bereich der Fäden, wobei die Fäden umhüllt werden. Derartige Lösungen wurden und werden in vielfältigen Ausgestaltungen eingesetzt.

Bei dem Fertigprodukt ist es wichtig, dass die Verankerung der Fäden im Extrusionsmaterial ausreichend ist, die gewünschten Wirkungen zu erzielen. Zwar könnte man den Durchmesser der Fäden reduzieren und dadurch die Kontaktoberfläche, bezogen auf das Fadengewicht, deutlich erhöhen. Sehr dünne Fäden lassen sich jedoch schlecht durch die Extrusionsdüse führen und sind in manchen Fällen auch ungeeignet, beispielsweise, wenn mit den Fäden eine bestimmte Steifigkeit des Fertigprodukts erreicht werden soll.

Um bei vorgegebenem Fadendurchmesser die Verankerung zu erhöhen, ist es vorgeschlagen worden, eine Aufrauhung der Fäden vorzunehmen. Dies ist vergleichsweise aufwendig und auch nur bei manchen Fadenmaterialien möglich. Auch wäre es wünschenswert, mit dem gleichen Extruder unterschiedliche Produkte herstellen zu können.

Eine Verbesserung insofern ist aus der DE-C2 28 13 217 zu entnehmen. Diese Druckschrift zeigt eine Lösung, bei der die Fadenführung relativ zur Düse verschiebbar ist, so dass eine Anpassung an die vorgesehene Kombination von Kautschuk, also im Wesentlichen dessen Temperatur und damit dessen Viskosität, und dem verwendeten Faden, also dem Fadenmaterial und der Fadenstärke, möglich ist.

Jedoch ist diese Lösung noch nicht ganz befriedigend, wenn es gilt, eine rasche Umrüstung für unterschiedliche zur extrudierende Produkte bereit zu stellen.

Ein weiteres Problem besteht darin, dass Fäden häufig brechen. Bei verdrillten Filamenten ist ein Bruch eines einzelnen Filaments bei guter Einbettung in die Kautschukmasse vergleichsweise wenig kritisch. Wenn jedoch ein Monofilament vorliegt, oder wenn miteinander relativ schlecht verankerte Polyfilamente vorliegen, die je gesonderten Zugbeanspruchungen unterworfen sind, ist dies kritisch, und es muss sichergestellt werden, dass die Filamente des Fadens bruchfrei im Fertigprodukt vorliegen.

Ein wesentlicher Grund, weswegen häufig ein Wechsel und Neuansatz des zu extrudierenden Produktes nicht vorgenommen wird, obwohl dies trotz eines Fadenbruchs oder Filamentbruchs angezeigt wäre, liegt in der Schwierigkeit, die Fadenführung neu zu bestücken, gerade wenn viele einzelne Filamente oder Fäden vorliegen.

Dies kann beispielsweise dadurch erfolgen, dass der Extrusionskopf leergefahren wird und die Fadenführung nach Lösen der entsprechenden Schrauben von hinten herausgezogen und neu bestückt wird.

Demgegenüber liegt der Erfindung die Aufgabe zu Grunde, eine Extrusionsvorrichtung gemäß dem Oberbegriff von Anspruch 1 zu schaffen, die auch bei Fadenbruch besser handhabbar ist, so dass die verbesserte Möglichkeit besteht, bei einem etwaigen Fadenbruch eine Neubestückung eines Festigkeitsträgerspeisers vorzunehmen.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass durch die Trennung der Düsenmundstücke die Möglichkeit eröffnet wird, den Festigkeitsträgerspeiser zugänglich zu machen und beispielsweise gerissene Filamente ausgesprochen einfach zu ersetzen. Dennoch kann überraschend mit ausgesprochen hohen Druck für den Extrusionskopf gearbeitet werden, was besondere Vorteile hinsichtlich des Anhaftens der Kautschukmasse an der Oberfläche der Filamente oder Festigkeitsträger bietet. So ist es ohne weiteres möglich, im Zuführbereich für die Extrusionsmasse, also dem Bereicht zwischen Festigkeitsträgerspeiser und Düse, einen Druck von beispielsweise 400 Bar bereitzustellen. Ein derartiger Druck erlaubt es, die Mikrorauigkeit der Oberfläche der Filamente auszunutzen und Teile der Kautschukmasse dort eindringen zu lassen. Die so erzeugten Oberflächeneffekte erhöhen die Haftung wesentlich, so dass eine große Kontaktoberfläche des Festigkeitsträgers ausgenutzt werden kann.

Die erfindungsgemäße Extrusionsvorrichtung erlaubt es mit einfachen Mitteln, die relative Lage des Festigkeitsträgerspeisers zur Düse einstellbar zu machen. Hierdurch lässt sich der verbleibende Freiraum in weiten Bereichen an die Erfordernisse, beispielsweise also die Art und Beschaffenheit der Festigkeitsträger, anpassen.

Durch das Auseinanderfahren der Düsenmundstücke ist es möglich, den Festigkeitsträgerspeiser frei zugänglich zu lagern, wobei sowohl ein einfaches Umbetten als auch ein maschinelles Verfahren möglich ist.

Bevorzugt wird der Festigkeitsträgerspeiser dann durch den Druck der Düsenmundstücke aufeinander in Position gehalten, so dass eine manuelle Verstellungsvorrichtung für die Position der Festigkeitsträgerspeisers nicht von dem Extrusionsdruck belastet ist.

In diesem Zusammenhang ist es auch möglich, bestimmte Positionen über ein Raster wie eine Riffelung zu fixieren.

Bevorzugt wird der Festigkeitsträgerspeiser von dem Ausgang der Extruderschnecke seitlich angeströmt. Die Festigkeitsträger werden hierdurch seitlich mit Kautschuk oder einer anderen extrudierbaren Masse beaufschlagt. Durch eine horizontale variable Position des Festigkeitsträgerspeisers lässt sich die unterschiedliche Strömungslänge kompensieren, so dass trotz eines Druckabfalls eine gleichmäßige Austrittsgeschwinigkeit bei mehreren parallel erzeugten Produkten realisierbar ist.

Erfindungsgemäß besonders günstig ist es, wenn als Festigkeitsträger Cords verwendet werden. Wenn ein Cord während der Produktion bricht oder reisst, können durch den erfindungsgemäß leicht freigebbaren Festigkeitsträgerspeiser die Cords schnell gewechselt werden.

Ein weiterer Vorteil der erfindungsgemäßen Extrusionsvorrichtung liegt in der leichten Wechselbarkeit der Düseneinsätze. Durch die Teilung und relative Verfahrbarkeit der Düsenmundstücke zueinander lässt sich der Düseneinsatz in üblicher Weise schnell wechseln und damit an die gewünschte Form des zu extrudierenden Produkts anpassen.

Erfindungsgemäß ist es auch möglich, eine Vielzahl von Düsen und dementsprechend zugehörigen Düsenmundstücken nebeneinander anzuordnen. Die oberen Düsenmundstücke können dann bevorzugt ebenso wie die unteren Düsenmundstücke je miteinander verbunden sein, wobei sie in einem oberen Düsenträger realisiert sein können. Die Düsenträger können dann gegeneinander verfahrbar sein, wobei die Verfahrrichtung bevorzugt vertikal ist, so dass alle oberen Düsenmundstücke gemeinsam von allen unteren Düsenmundstücken trennbar sind.

Erfindungsgemäß besonders günstig ist es, wenn die Düsenmundstücke je im Wesentlichen halbkreisförmig ausgestaltet sind, um einen Düseneinsatz aufzunehmen. Der Düseneinsatz ist dann wechselbar und weist den je in geeigneter Form ausgebildeten Düsenschlitz auf. Durch eine an sich bekannte formschlüssige Lagerung der Düseneinsätze in den Düsenmundstücken lassen sich die hohen Extrusionsdrücke ohne weiteres auffangen.

Die erfindungsgemäße Antriebsvorrichtung hält die Düsenmundstücke erfindungsgemäß fest aufeinander, wenn extrudiert wird. Um den Pressdruck der Antriebsvorrichtung in geschlossenem Zustand der Extrusionsvorrichtung zu unterstützen, kann beispielsweise ein starker Elektromagnet vorgesehen sein, der während der Extrusion eingeschaltet ist und zum Verfahren, insbesondere zum Lösen der Düsenmundstücke voneinander, ausgeschaltet ist, oder eine Schraubbolzen-/ Mutter-Kombination.

Es versteht sich, dass die Antriebsvorrichtung in beliebiger geeigneter Weise ausgebildet sein kann. Bevorzugt ist eine Ausgestaltung mit mindestens einem Hydraulikzylinder, der ein rasches Öffnen und Schließen der Düsenmundstücke erlaubt.

Weitere Vorteile, Einzelheiten und Merkmale ergeben sich aus der nachfolgenden Beschreibung eines Ausführungsbeispiels der Erfindung anhand der Zeichnungen.

Es zeigen:
- Fig. 1: eine schematische Ansicht einer Ausführungsform der Erfindung, wobei die Düsenmundstücke geschlossen sind;
- Fig. 2: die Ausführungsform gemäß Fig. 1, wobei die Düsenmundstücke auseinander gefahren sind;
- Fig. 3: die Ausführungsform gemäß Fig. 1 und Fig. 2 in geöffnetem Zustand, jedoch in einem seitlichen Schnitt; und
- Fig. 4: eine Schnittansicht durch eine erfindungsgemäße Extrusionsvorrichtung in der vorstehenden Ausführungsform in geschlossenem Zustand.

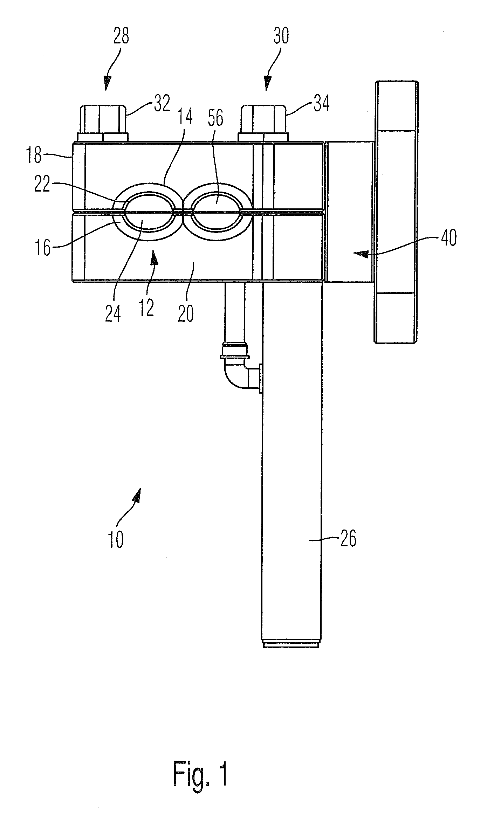

Die in Fig. 1 dargestellte Extrusionsvorrichtung 10 weist eine Düse 12 auf, die in dem dargestellten Ausführungsbeispiel mit zwei Düsenmundstücken 14 und 16 versehen ist. Diese Düsenmundstücke 14 und 16 sind an einem oberen Düsenträger 18 und einem unteren Düsenträger 20 ausgebildet und umschließen im wesentlichen gemeinsam ringförmig einen Düseneinsatz 22, der seinerseits einen Düsenschlitz 24 aufweist. Die Düsenträger 18 und 20 - und damit auch die Düsenmundstücke 14 und 16 - sind gegeneinander verfahrbar. Hierzu ist eine Antriebsvorrichtung 26 vorgesehen, die vertikal wirkt, und über welche der obere Düsenträger 18 von dem unteren Düsenträger 20 trennbar ist, indem er nach oben verfahren wird.

In geschlossenem Zustand der Düsenmundstücke 14 und 16 liegen die Düsenträger 18 und 20 im Übrigen flach aufeinander auf. In dem dargestellten Ausführungsbeispiel sind zum sicheren Schließen der Düsenträger 18 und 20 aneinander zusätzlich Schraubbolzen 28, 30 mit entsprechenden Muttern 32 und 34 vorgesehen, über welche eine Fixierung der Düsenträger 18 und 20 aneinander realisiert ist. Es versteht sich, dass anstelle dessen beliebige andere Fixierungsmittel vorgesehen sein können, und dass es auch möglich ist, den Schließzustand der Düse 12 in beliebiger anderer Weise sicherzustellen.

Wie aus Fig. 1 ersichtlich ist, ist eine im Übringen glatte und gerade Teilungsebene 40 zwischen den Düsenträgern 18 und 20 vorgesehen, und die Schraubbolzen 28 und 30 durchtreten den oberen Düsenträger 18.

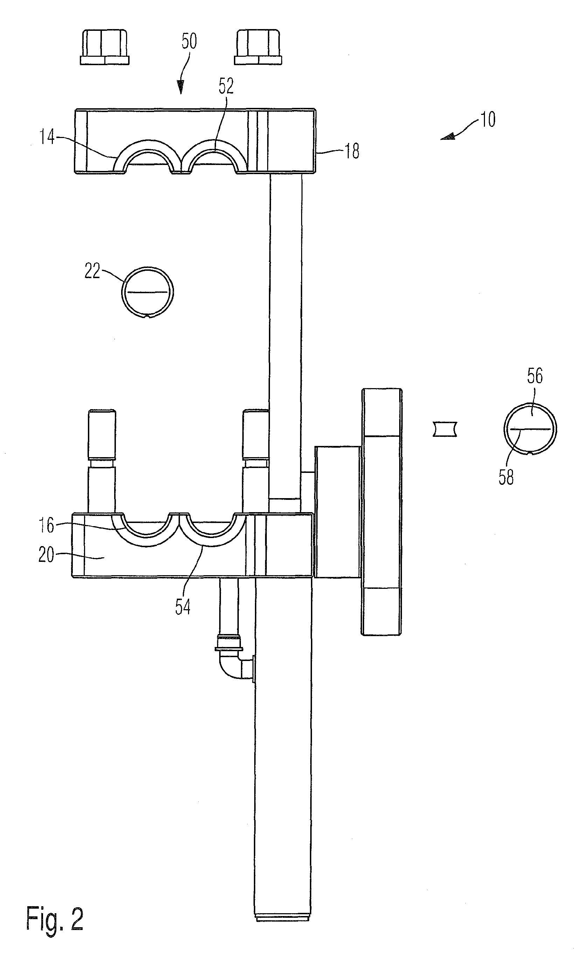

Aus Fig. 2 ist ersichtlich, wie die Düsenträger 18 und 20 auseinanderfahrbar sind. Wie dort ersichtlich ist, werden hierdurch die Düsenmundstücke 14 und 16 voneinander getrennt. In den hier dargestellten Ausführungsbeispiel ist der Düse 12 eine weitere Düse 50 benachbart, die ebenfalls zwei einander gegenüberliegende Düsenmundstücke 52 und 54 aufweist, die in ihrer Ausgestaltung den Düsenmundstücken 14 und 16 entsprechen. Das obere Düsenmundstück 52 ist gemeinsam mit dem oberen Düsenmundstück 14 an dem oberen Düsenträger 18 ausgebildet, und das untere Düsenmundstück 54 gemeinsam mit dem unteren Düsenmundstück 16 an dem unteren Düsenträger 20. Die Düsenmundstücke 52 und 54 nehmen einen weiteren Düseneinsatz 56 auf, der mit einem Düsenschlitz 58 versehen ist und im Übringen gleichartig mit dem Düseneinsatz 22 ausgebildet ist.

Wie aus Fig. 2 ersichtlich ist, können die Düseneinsätze 22 und 56 beliebig entnommen und gewechselt werden.

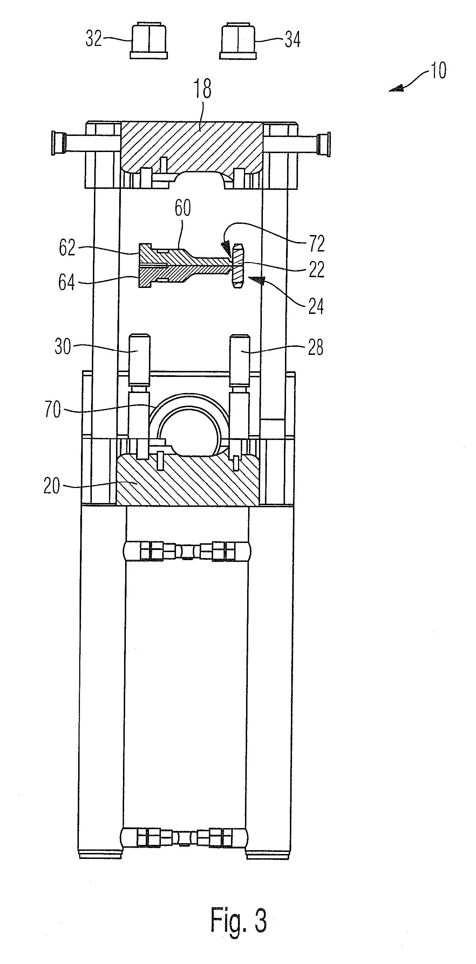

Aus Fig. 3 ist ersichtlich, in welcher Weise ein Festigkeitsträgerspeiser 60 in der erfindungsgemäßen Extrusionsvorrichtung 10 aufgenommen ist. Der Festigkeitsträgerspeiser 60 ist zweiteilig ausgebildet und besteht aus einem oberen Teil 62 und einem unteren Teil 64. Er ist in horizontaler Richtung verfahrbar um den Abstand zu dem zugehörigen Düseneinsatz 22 einstellen zu können. Der Festigkeitsträgerspeiser weist in an sich bekannter Weise in seinen beiden Teilen 62 und 64 Nuten, insbesondere halbrunde Nuten auf, die nicht dargestellte Festigkeitsträger führen und dem Düsenschlitz 24 zuleiten.

Seitlich neben dem Festigkeitsträgerspeiser 60 ist die Extruderschnecke 70 ausgebildet, die es ermöglicht, den Freiraum 72 zwischen dem Festigkeitsträgerspeiser und dem Düseneinsatz 22 gleichmäßig mit natürlichem oder künstlichem Kautschuk zu füllen und so die Festigkeitsträger zu umhüllen.

In dem geschlossenem Zustand der Düsenträger 18 und 30 wird der Festigkeitsträgerspeiser 60 an einer vorgegebenen Stelle zusammengepresst, so dass seine Teile 62 und 64 fest aufeinander aufliegen.

Es ist ersichtlich, dass der Festigkeitsträgerspeiser 60 in dem dargestellten Zustand gemäß Fig. 3 frei entnehmbar und wechselbar ist, so dass die Festigkeitsträger bei Bedarf dort ohne Weiteres eingelegt werden können, etwa wenn ein Festigkeitsträger während der Produktion bricht oder reisst.

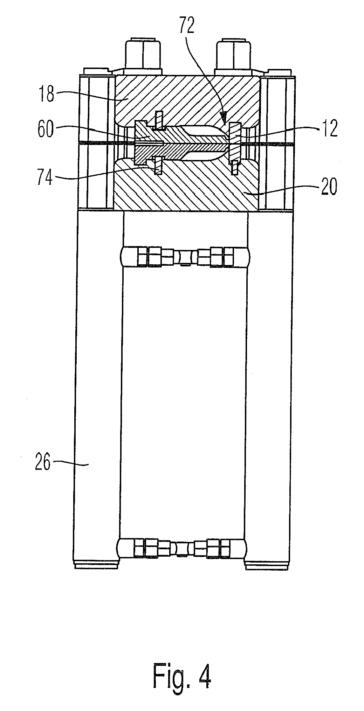

Aus Fig. 4 ist ersichtlich, in welcher Weise der Festigkeitsträgerspeiser 60 zwischen dem oberen Düsenträger 18 und dem unteren Düsenträger 20 fixiert ist. Wie ersichtlich ist, ist der Festigkeitsträgerspeiser in vertikaler Richtung nicht beweglich, hingegen wohl in horizontaler Richtung, also in Auslassrichtung der Düse 12. Hierzu liegt er über ein Führungselement 74 mit Spiel horizontal gelagert, so dass der Freiraum 72 zur Düse 12 hin einstellbar ist.

## Patentansprüche

1. Extrusionsvorrichtung, mit einer Extruderschnecke für das Fördern extrudierbarer Masse, insbesondere natürlichen oder künstlichen Kautschukwerkstoffen, mit einem Festigkeitsträgerspeiser, der Festigkeitsträger in Richtung einer Düse führt, über welche sie zusammen mit der extrudierbaren Masse aus der Extrusionsvorrichtung austreten, **dadurch gekennzeichnet, dass** die Düse (12) zwei Düsenmundstücke (14,16) aufweist, die relativ zueinander verfahrbar sind, und dass die Festigkeitsträger (60) insbesondere in einer horizontalen Trennebene geführt sind.

2. Extrusionsvorrichtung nach Anspruch 1, **dadurch gekennzeichnet, dass** die Austrittsrichtung des Festigkeitsträgerspeisers (60) quer zur Achse der Extruderschnecke (70), insbesondere im Wesentlichen rechtwinklig zu dieser, verläuft.

3. Extrusionsvorrichtung nach Anspruch 1, **dadurch gekennzeichnet, dass** die Austrittsrichtung des Festigkeitsträgerspeisers (60) die Düse (12) durchtritt, insbesondere koaxial zu dieser angeordnet ist.

4. Extrusionsvorrichtung nach einem der vorhergehenden Ansprüche, **dadurch gekennzeichnet, dass** die Düse (12) einen Düseneinsatz (22, 56) aufweist, der von den Düsenmundstücken (14, 16, 52, 54) umgriffen ist und der insbesondere einen Düsenschlitz (24, 58) bildet.

5. Extrusionsvorrichtung nach Anspruch 4, **dadurch gekennzeichnet, dass** die Düsenmundstücke (52, 54) in geschlossenem Zustand des Extrusionskopfes den Düseneinsatz (56) ringförmig umgreifen.

6. Extrusionsvorrichtung nach einem der vorhergehenden Ansprüche, **dadurch gekennzeichnet, dass** jedes Düsenmundstück (52, 54) im Wesentlichen halbkreisförmig aufgebaut ist.

7. Extrusionsvorrichtung nach einem der vorhergehenden Ansprüche, **dadurch gekennzeichnet, dass** zwei Düsen (12, 50) nebeneinander angeordnet sind, welche Düsenmundstücke (14,16, 52, 54) aufweisen, wobei die oberen Mundstücke (14, 52) je gemeinsam gegenüber den unteren Mundstücken (16, 54) verfahrbar sind.

8. Extrusionsvorichtung nach einem der vorhergehnden Ansprüche, **dadurch gekennzeichnet, dass** eine Antriebsvorrichtung (26) in einem Extrusionskopf der Extrusionsvorrichtung (10) ausgebildet ist, über welche ein oberer Düsenträger (18) von einem unteren Düsenträger (20) trennbar ist, wobei die Antriebsvorrichtung (26) insbesondere hydraulisch oder pneumatisch arbeitet.

9. Extrusionsvorrichtung nach einem der vorhergehenden Ansprüche, **dadurch gekennzeichnet, dass** durch das Trennen der Düsenmundstücke (14, 16) voneinander der Festigkeitsträgerspeiser (60) freigebbar ist.

10. Extrusionsvorrichtung nach einem der vorhergehenden Ansprüche, **dadurch gekennzeichnet, dass** der Festigkeitsträgerspeiser (60) zweiteilig ausgebildet ist und aus einem unteren (62) und einem oberen (64) Teil besteht, wobei die Teile durch Zusammenführen von Düsenträgern über eine Antriebsvorrichtung (26) aufeinander drückbar sind.

11. Extrusionsvorrichtung nach einem der vorhergehenden Ansprüche, **dadurch gekennzeichnet, dass** die Teilung der Düsenmundstücke (14, 16) in horizontaler Richtung verläuft und die Antriebsvorrichtung (26) für Düsenträger (18, 20) der Düsenmundstücke vertikal wirkt.

12. Extrusionsvorrichtung nach einem der vorhergehnden Ansprüche, **dadurch gekennzeichnet, dass** die einander zugewandten Wirkflächen der Düsenträger (18, 20), also insbesondere die einander zugewandten freiliegenden Oberflächen, hinterschneidungsfrei ausgebildet sind, und insbesondere sich keine Schrauben, Bolzen oder dergleichen zwischen den Düsenträgern (18, 20) erstrecken, abgesehen von der Antriebsvorrichtung (26) für die Düsenträger.

13. Extrusionsvorrichtung nach einem der vorhergehenden Ansprüche, **dadurch gekennzeichnet, dass** zwischen dem Festigkeitsträgerspeiser (60) und einem Düseneinsatz (2) der Düse (12) ein Freiraum (72) ausgebildet ist, der sich um die Festigkeitsträger erstreckt.

14. Extrusionsvorrichtung nach einem der vorhergehenden Ansprüche, **dadurch gekennzeichnet, dass** ein zwischen dem Düseneinsatz (12) und dem Festigkeitsträgerspeiser (60) ausgebildeter Freiraum (72) Festigkeitsträger vollständig umgibt und insbesondere im Schnitt im Wesentlichen V-förmig auf einen Düsenschlitz (58) zu verlaufend ausgebildet ist.

15. Extrusionsvorrichtung nach einem der vorhergehenden Ansprüche, **dadurch gekennzeichnet, dass** durch strömungstechnische Mittel der Druckabfall bei seitlicher Anströmung der Düsen (12) durch die Extruderschnecke (70) kompensiert ist.
